# EUROPÄISCHE PATENTSCHRIFT

(11) **EP 2 479 077 B1**
(45) Veröffentlichungstag und Bekanntmachung des Hinweises auf die Patenterteilung: **03.07.2013**
(21) Anmeldenummer: 11009633.6
(22) Anmeldetag: 07.12.2011
(51) Int. Cl.: B60W 30/18, B60W 50/14, B60W 40/08

(54) **Verfahren zum Betrieb eines eine auf einen Überholvorgang bezogene Empfehlung ausgebenden Fahrerassistenzsystems eines Kraftfahrzeugs und Kraftfahrzeug**
Method for operating a driver assistance system on a motor vehicle outputting a recommendation related to an overtaking manoeuvre and motor vehicle
Procédé de fonctionnement d'un système d'assistance au conducteur émettant des conseils relatifs à un processus de doublement d'un véhicule automobile et véhicule automobile

(30) Priorität: 21.01.2011 DE 102011009106
(43) Veröffentlichungstag der Anmeldung: 25.07.2012
(73) Patentinhaber: Audi AG, 85045 Ingolstadt (DE); Audi Electronics Venture GmbH, 85080 Gaimersheim (DE)
(72) Erfinder: Taner, Anil, 85051 Ingolstadt (DE)
(74) Vertreter: Thielmann, Frank

(56) Entgegenhaltungen:
- EP-A2- 1 127 727
- DE-A1- 10 255 331
- DE-A1- 19 600 059
- DE-A1- 19 725 656
- DE-A1-102008 012 644

## Beschreibung

Die Erfindung betrifft ein Verfahren zum Betrieb eines eine auf einen Überholvorgang bezogene Empfehlung, insbesondere eine gegen einen Überholvorgang sprechende Empfehlung, ausgebenden Fahrerassistenzsystems eines Kraftfahrzeugs mit einer an oder in wenigstens einem Außenspiegel vorgesehenen, in Fahrtrichtung des Kraftfahrzeugs orientierten Kamera, deren Daten durch das Fahrerassistenzsystem ausgewertet werden. Daneben betrifft die Erfindung ein Kraftfahrzeug mit einem solchen Fahrerassistenzsystem.

Bei Fahrten mit einem Kraftfahrzeug ist es häufig für den Fahrer schwierig, das tatsächliche Risiko eines Überholvorgangs korrekt einzuschätzen. Insbesondere, wenn das Kraftfahrzeug, beispielsweise auf einer Landstraße, hinter Lastkraftwagen, Reisebussen, Kastenwagen oder Kleinbussen unterwegs ist, wird der Überholvorgang häufig dadurch erschwert, dass man aufgrund des vorausfahrenden großen Kraftfahrzeugs die Gegenfahrbahn und damit auch den Gegenverkehr nicht oder nur schwer sehen kann. Mithin kommt es häufig vor, dass Fahrer vor dem Überholvorgang den Kopf bis zur Seitenscheibe strecken und/oder weit auf die Gegenfahrbahn fahren, um das Vorhandensein von Gegenverkehr zu erkennen.

Mithin wurde vorgeschlagen, den Fahrer durch die Integration einer Kamera in einem Seitenspiegel des Kraftfahrzeugs, insbesondere an die äußerste Spitze des Seitenspiegels, zu unterstützen, wobei die Kamera in Fahrrichtung ausgerichtet ist. Dabei kann beispielsweise vorgesehen sein, dass das Bild der Kamera auf einem Anzeigemittel in dem Kraftfahrzeug, beispielsweise an einem Bildschirm, zur Anzeige gebracht wird, so dass ein Fahrer die Möglichkeit eines Überholvorgangs bewerten kann.

Eine Hinderniserkennungseinrichtung für Kraftfahrzeuge ist beispielsweise aus der DE 200 21 458 U1 bekannt. Dabei ist an der äußeren seitlichen Peripherie eines Kraftfahrzeugs, insbesondere an oder in einem Außenspiegel, eine in Fahrtrichtung gerichtete Kamera vorgesehen. Weiterhin wird eine Radareinrichtung verwendet werden. Dort sollen nun Messsignale derart aufbereitet werden, dass diese Signale eine Entscheidungshilfe für den Fahrer darstellen. Aus den Messwerten des Radargerätes werden der Abstand zum Hindernis, dessen Geschwindigkeit und die Zeitspanne bis zum Erreichen desselben berechnet, wobei zusätzliche Betriebsparameter des Kraftfahrzeugs berücksichtigt werden, um hieraus ein Signal zu berechnen, welches dem Fahrer anzeigt, ob ein Wiederholvorgang gefahrlos möglich, riskant oder unmöglich ist.

Dabei wird jedoch der zusätzliche Radarsensor benötigt, zum anderen können wesentliche, die Einschätzung der Möglichkeit eines Überholvorgangs anzeigende Parameter nicht berücksichtigt und ermittelt werden.

DE 197 25 656 A1 betrifft ein Sicherheits-Überholsystem, wobei mittels Sensoren verschiedene Entfernungen und Relativgeschwindigkeiten von Objekten vor dem überholenden Kraftfahrzeug erfasst werden. Hieraus wird geschlussfolgert, ob ein Überholvorgang überhaupt möglich ist. Die Sensoren basieren dabei auf Laufzeitmessungen. Das dortige Detektieren der Einscherlücke ermöglicht dem System, unterschiedliche Längen von zu überholenden Fahrzeugen für die Überholprognose zu berücksichtigen.

DE 10 2008 012 644 A1 betrifft einen Längsführungsassistenten mit Seitenassistenzfunktion für Kraftfahrzeuge. Eine Vorfeldsensorik wird zur Überwachung des Raumes vor dem Fahrzeug verwendet, wobei die Geschwindigkeit des Fahrzeugs auf eine Sollgeschwindigkeit und/oder einen Sollabstand geregelt wird. Die Sollgeschwindigkeit und/oder Sollabstand kann in Abhängigkeit von Daten der Seitenraumsensorik modifiziert werden. Mit der Vorfeld- und/oder Seitenraumsensorik kann die Länge eines gerade überholten LKWs oder eines Gespanns abgeschätzt werden. Die Seitenraumsensorik ist dabei dazu eingerichtet, Fahrzeuge auf gleicher Höhe wie das eigene Fahrzeug zu detektieren. Die Längenmessung erfolgt dabei so, dass der Zeitpunkt erfasst wird, an dem die Rückfront den Sensor passiert, was durch Radarsensoren geschieht. Dann bilden die Führerkabine oder die vorderen Kotflügel des LKWs Reflektionszentren, die vom Radarsensor der Vorfeldsensorik geortet werden können, so dass als Wert die Länge des LKWs ermittelt wird. Eine derartige Kombination von Vorfeld- und Seitenraumsensorik kann auch die Auswertung von Videobildern umfassen.

Der Erfindung liegt daher die Aufgabe zugrunde, ein Verfahren zum Betrieb eines Fahrerassistenzsystems anzugeben, das eine sicherere und aufwandsärmere Abgabe einer Überholempfehlung, insbesondere einer Überholwarnung, ermöglicht.

Zur Lösung dieser Aufgabe ist bei einem Verfahren der eingangs genannten Art erfindungsgemäß vorgesehen, dass, insbesondere aus den Daten der Kamera, eine Länge eines vorausfahrenden Kraftfahrzeugs und/oder einer vorausfahrenden Kraftfahrzeugkolonne ermittelt und bei der Ermittlung der Empfehlung berücksichtigt wird.

Es wird also von einem System ausgegangen, welches den Fahrer unter Verwendung einer an oder in einem Außenspiegel vorgesehenen Kamera im Vorfeld von Überholvorgängen unterstützen soll. Bevorzugt wird dabei ein "Überholwarner" verwendet, der eine Empfehlung gegen einen Überholvorgang ausspricht, beispielsweise durch ein rotes Licht oder eine anders geartete optische und/oder akustische und/oder haptische Warnung. Die Empfehlung, insbesondere die Empfehlung, nicht zu überholen, kann dabei weitere Hinweise umfassen, worauf im Folgenden noch näher eingegangen werden wird.

Erfindungsgemäß wird nun vorgeschlagen, als wesentliche Größe auch die Länge eines vorausfahrenden Kraftfahrzeugs und/oder einer vorausfahrenden Kraftfahrzeugkolonne - insgesamt also die Länge des wenigstens einen zu überholenden Kraftfahrzeugs - zu ermitteln und neben den bereits im Stand der Technik bekannten Größen (Abstand, Relativgeschwindigkeit, Zeitlücke, Betriebsdaten des Kraftfahrzeugs) zu berücksichtigen, wenn die Möglichkeit für den Überholvorgang bewertet wird. Auf diese Weise wird die Empfehlung verlässlicher und es wird insgesamt die Sicherheit erhöht, nachdem - insbesondere bei zu überholenden Kolonnen - die Länge eine wesentliche Rolle bei der Beurteilung spielt.

Mit besonderem Vorteil wird dabei die Länge aus den Daten der im Außenspiegel vorgesehenen Kamera ermittelt, so dass keine weiteren Sensoren oder dergleichen benötigt werden. Eine Länge kann aus einer Kamera ermittelt werden, indem beispielsweise über einen geeigneten Algorithmus das vordere und das hintere Ende vorausfahrender Kraftfahrzeuge beschreibende Eckpunkte in einem aktuellen Kamerabild ermittelt werden. Da die Optik der Kamera fest ist und dem Fahrerassistenzsystem zudem bekannt ist, können die Entfernungen der Eckpunkte und mithin auch deren Abstände ermittelt werden. Bei einer Kolonne folgt zwangsläufig, dass auch die Abstände zwischen den Kraftfahrzeugen der Kolonne berücksichtigt und in die Gesamtlänge mit aufgenommen werden können.

In besonders zweckmäßiger Weiterbildung des erfindungsgemäßen Verfahrens kann dabei vorgesehen sein, dass bei einer vorausfahrenden, zu überholenden Kolonne die Länge wenigstens einer Lücke in der Kolonne ermittelt wird und bei einer zum Einscheren ausreichenden Lücke nur die bis zu der Lücke zu überholenden Kraftfahrzeuge bei der Ermittlung der Empfehlung berücksichtigt werden. Nachdem, wie oben beschrieben, als Teil der Beurteilung einer zu überholenden Kolonne auf die Abstände zwischen den einzelnen Kolonnenfahrzeugen ohnehin ermittelt werden, können diese vorteilhaft dahingehend ausgewertet werden, ob sie einen hinreichenden Raum zum Einscheren bieten, so dass nur ein hinteres Stück der Kolonne in einem Überholvorgang tatsächlich auf einmal überholt werden muss. Mit anderen Worten bestimmt die Länge der wenigstens einen Lücke, welches wenigstens eine voranfahrende Kraftfahrzeug in einem Überholvorgang überholt werden muss. Dabei kann beispielsweise vorgesehen sein, dass eine zum Einscheren ausreichende Lücke anhand eines Schwellwertes bestimmt wird. Die Länge detektierter Lücken wird also mit einem Schwellwert verglichen, der beispielsweise 15 m oder 20 m betragen kann, vorzugsweise jedoch geschwindigkeitsabhängig gewählt werden kann, beispielsweise im Rahmen einer funktionalen Abhängigkeit oder einer Look-Up-Tabelle. In zweckmäßiger Weiterbildung kann zudem vorgesehen sein, dass zum Einscheren geeignete Lücken in dem einem Fahrer angezeigten aktuellen Bild der Kamera angezeigt werden, insbesondere hervorgehoben dargestellt werden. So kann der Fahrer selber eine bessere Einschätzung der Situation vornehmen.

In einer besonders vorteilhaften Ausgestaltung der vorliegenden Erfindung kann vorgesehen sein, dass durch Auswertung allein der Daten der Kamera wenigstens eine für einen Überholvorgang relevante Information bezüglich eines entgegenkommenden und/oder vorausfahrenden Verkehrsteilnehmers, insbesondere einen Abstand zu diesem Verkehrsteilnehmer und/oder eine Geschwindigkeit des Verkehrsteilnehmers und/oder eine Zeitlücke zu dem Verkehrsteilnehmer, ermittelt und bei der Erstellung der an den Fahrer auszugebenden Empfehlung berücksichtigt wird. Dabei kann bevorzugt vorgesehen sein, dass die für die Ermittlung der Empfehlung relevanten Umfeldinformationen insgesamt allein aus den Daten der Kamera ermittelt werden. Während beispielsweise bereits die Länge vorausfahrender Kraftfahrzeuge und/oder der Lücken zwischen diesen Kraftfahrzeugen mittels einer geeigneten Bildverarbeitungseinheit aus den Daten der Kamera ermittelt werden können, ist es insbesondere mit Vorteil zusätzlich auch möglich, die Informationen bezüglich des Gegenverkehrs wie auch weitere Informationen zum vorausfahrenden Verkehr ebenso durch die Bildverarbeitungseinheit aus den Kameradaten zu ermitteln, beispielsweise den Abstand zu einem Verkehrsteilnehmer und dessen Geschwindigkeit bzw. die Zeitlücke zu dem Verkehrsteilnehmer. Wie bereits oben erwähnt wurde, ist es bei bekannter Optik der Kamera problemlos möglich, Abstände zu bestimmen, so dass sich mithin durch Betrachtung aufeinanderfolgender Bilder auch Geschwindigkeiten und/oder Zeitlücken bzw. Begegnungszeiten (time to collision) allein aus den Kameradaten ermitteln lassen. Dies kann, wie erwähnt, durch eine Bildverarbeitungseinheit erfolgen, die idealerweise alle bei der Ermittlung der Empfehlung berücksichtigten Umgebungsgrößen bestimmt, also neben den Informationen bezüglich eines entgegenkommenden und/oder wenigstens eines vorausfahrenden Verkehrsteilnehmers auch die Länge eines vorausfahrenden Kraftfahrzeugs und/oder einer vorausfahrenden Kraftfahrzeugkolonne bzw. Lücken in der Kolonne. Durch die Berechnung des Abstandes und/oder der Geschwindigkeit und/oder der Zeitlücke der anderen Kraftfahrzeuge aus den Kamerabildern, also der Kameradaten, kann auf einen zusätzlichen Radarsensor, der aus Bauraumgründen kaum in einen Außenspiegel integriert werden kann, verzichtet werden. Neben dem Bauraum- und Designvorteil ergeben sich hieraus auch Kostenvorteile.

In weiterer zweckmäßiger Ausgestaltung der vorliegenden Erfindung kann vorgesehen sein, dass eine ein Teleobjektiv umfassende Kamera verwendet wird. Eine derartige Ausgestaltung mit einem teleartigen Objektiv ist besonders vorteilhaft, um auch Kraftfahrzeuge in größeren Entfernungen, beispielsweise im Abstand von 400 - 500 m, erkennen zu können, und gleichzeitig in der Lage zu sein, beispielsweise deren Abstand und Geschwindigkeit berechnen zu können. Gleichzeitig muss es mittels der Kameradaten möglich sein, vor dem Überholvorgang und/oder beim Start des Überholvorgangs die zu überholenden Kraftfahrzeuge und deren Länge zu erkennen. Dies alles kann in dieser Erfindungsausgestaltung bei der Wahl des Objektivs berücksichtigt werden. Dabei hängt der geeignete Öffnungswinkel der Kamera von der verfügbaren Auflösung der Kamera ab und wird deshalb abhängig von der zu nutzenden Kamera definiert. Bei einer VGA-Auflösung der Kamera kann beispielsweise ein Teleobjektiv mit einem Öffnungswinkel von 5 - 6° gewählt werden. Es sei an dieser Stelle noch angemerkt, dass in diesem Fall auch vorgesehen sein kann, 20 - 40 Kamerabilder pro Sekunde auszuwerten. Je nachdem, welches Objektiv letztlich für die Kamera verwendet wird, ergibt sich daraus zwangsläufig die beim erfindungsgemäßen Verfahren genutzte Kameraoptik und Auflösung des Sensors bzw. umgekehrt.

In einer weiteren, besonders bevorzugten Ausgestaltung der vorliegenden Erfindung, die im Übrigen auch unabhängig von der Bestimmung der Länge des wenigstens einen vorausfahrenden Kraftfahrzeugs bzw. der Kolonne vorteilhaft bei einem Verfahren der eingangs genannten Art realisiert sein kann, kann vorgesehen sein, dass bei der Erstellung der Empfehlung einen zukünftigen Straßenverlauf vor dem Kraftfahrzeug beschreibende prädiktive Streckendaten eines Navigationssystems berücksichtig werden. Die Bestimmung derartiger prädiktiver Streckendaten in einem Navigationssystem ist grundsätzlich bekannt und kann beispielsweise dadurch erfolgen, dass zunächst über einen Positionssensor, insbesondere einen GPS-Sensor, eine aktuelle geodätische Position des Kraftfahrzeugs bestimmt wird, woraufhin ein Abgleich mit den Kartendaten erfolgt, so dass festgestellt werden kann, wo auf welcher Straße sich das Kraftfahrzeug befindet. Ausgehend hiervon sind aus den Kartendaten des Navigationssystems dann Informationen darüber erhältlich, wie der Straßenverlauf im Weiteren vor dem Kraftfahrzeug aussieht. Selbstverständlich sind auch andere Arten denkbar, an prädiktive Streckendaten zu gelangen. Diese prädiktiven Streckendaten können nun im Hinblick auf einen möglichen Überholvorgang ausgewertet werden, insbesondere im Hinblick darauf, ob von einem Überholvorgang abgeraten werden müsste. Konkret kann dabei vorgesehen sein, dass bei aufgrund eines kurvigen Straßenverlaufes nicht von der Kamera erfassbaren entgegenkommenden Verkehrsteilnehmern und/oder einer in einem vorbestimmten, gegebenenfalls von der aktuellen Geschwindigkeit des Kraftfahrzeugs abhängigen Entfernungsbereich auftretenden Kreuzung, insbesondere ohne eine Auswertung von Kameradaten, als Empfehlung eine Warnung an den Fahrer ausgegeben wird. Damit werden weitere wichtige Faktoren berücksichtigt, die der Sicherheit zuträglich sind. So kann vorgesehen sein, dass das Fahrerassistenzsystem auf Basis der prädiktiven Streckendaten erkennt, ob die Kamera überhaupt entgegenkommende Fahrzeuge sehen kann oder nicht. Beispielsweise sind in einer Rechtskurve entgegenkommende Fahrzeuge in der Kurve mit der Kamera (oder auch anderen in Fahrtrichtung gerichteten Sensoren) nicht sichtbar. Die prädiktiven Streckendaten können auch Aufschluss darüber geben, ob sich das Kraftfahrzeug einer Kreuzung nähert, und dass letztlich andere Fahrzeuge in die für den Überholvorgang benutzte Spur einfahren könnten. Wird eine derartige Situation erkannt, so erfolgt eine Empfehlung, nicht zu überholen, wobei zusätzlich ein Hinweis auf die Ursache zugefügt werden kann. In weiterer Ausgestaltung der Erfindung kann vorgesehen sein, dass nach einer ausgegebenen Warnung bei einem für einen Überholvorgang in Frage kommenden zukünftigen Straßenverlauf ein entsprechender Hinweis an den Fahrer ausgegeben wird. Dem Fahrer kann also mitgeteilt werden, wann ein gerader Streckenabschnitt ohne Kreuzung erreicht wird, in dem der Überholvorgang gegebenenfalls besser vorgenommen werden kann. Es sei an dieser Stelle nochmals hervorgehoben, dass eine derartige Auswertung der prädiktiven Streckendaten vorzugsweise einer Auswertung von Kameradaten vorgeschaltet ist, nachdem dann, wenn aufgrund des Straßenverlaufs festgestellt würde, dass ein Überholvorgang auf Basis der Kameradaten nicht zuverlässig abgeschätzt werden kann, eine Auswertung von Kameradaten gar nicht erst erfolgen muss.

Allgemein kann beim erfindungsgemäßen Verfahren im Übrigen vorgesehen sein, dass eine eine mögliche Überholabsicht beschreibende Größe ermittelt wird, wobei nur bei einer eine mögliche Überholabsicht anzeigenden Größe eine Empfehlung ausgegeben wird. Ein derartiges Vorgehen ist grundsätzlich bekannt, wobei Kriterien berücksichtigt werden können, die auch bereits bei Spurhalteassistenten (lane departure warning - LDW) oder dergleichen angesetzt werden. Konkret kann vorgesehen sein, dass zur Ermittlung der Größe Daten der Kamera und/oder Daten eines querführenden Fahrerassistenzsystems und/oder Daten eines längsführenden Fahrerassistenzsystems und/oder Daten zur Betätigung eines Fahrtrichtungsanzeigers berücksichtigt werden. Es können also vorteilhaft weitere Fahrerassistenzsysteme und Daten, die diese ohnehin ermitteln, genutzt werden. So kann die Erkennung beispielsweise in Abhängigkeit von Daten von Fahrerassistenzsystemen zur Fahrspurerkennung/Fahrspurverlassenswarnung und/oder eines Tempomats mit automatischer Abstandsregelung (ACC), der beispielsweise eine Auffahrgeschwindigkeit auf das unmittelbar vorausfahrenden Kraftfahrzeug liefern kann, erfolgen. Auch die Betätigung eines Fahrtrichtungsanzeigers kann einen Hinweis auf eine Überholabsicht geben. Diese sind eigenständige Fahrerassistenzsysteme, die das Fahrerassistenzsystem zur Ermittlung einer auf einen Überholvorgang bezogenen Empfehlung unterstützen und damit im erfindungsgemäßen Verfahren genutzt werden, aber auch unabhängig vom Überholempfehlungs-Fahrerassistenzsystem existieren.

Als Kriterium für eine mögliche Überholabsicht kann ein schnelles Auffahren auf ein voranfahrendes Kraftfahrzeug und/oder ein Fahren am linken Fahrbahnrand bei der Ermittlung der Größe berücksichtigt werden. Eine schnelle Annäherung an ein vorausfahrendes Fahrzeug oder das Lenken an den linken Fahrspurrand werden häufig bei Fahrern beobachtet, die eine Überholabsicht tragen. Mithin können solche Kriterien vorteilhaft genutzt werden. Ermittelt werden können die zur Beurteilung geeigneten Daten, wie beschrieben, idealerweise durch andere Fahrerassistenzsysteme.

In einer zweckmäßigen Weiterbildung des Erfindungsgedankens kann bei einem aus Daten der Kamera und/oder Daten eines anderen Fahrzeugsystems erkannten Überholverbotsverkehrszeichen und/oder einer aus Daten der Kamera und/oder Daten eines anderen Fahrzeugsystems erkannten durchgezogenen Linie zur Überholspur und/oder einer aus Daten der Kamera und/oder Daten eines anderen Fahrzeugsystems erkannten Geschwindigkeitsbegrenzung, die bei der Durchführung eines Überholvorgangs überschritten werden müsste, eine einen entsprechenden Hinweis enthaltende Warnung als Empfehlung an den Fahrer ausgegeben werden. Dabei kann eine Überschreitungstoleranz in dem System hinterlegt sein. Es sei darauf hingewiesen, dass es grundsätzlich auch möglich ist, eine Bildbearbeitungseinheit, die ohnehin Daten der erfindungsgemäß vorgesehenen Kamera auswertet, weiter so auszubilden, dass beispielsweise auch Verkehrszeichen, insbesondere aber auch eine durchgezogene Linie zur Überholspur erkannt werden können. Insbesondere kann eine im Außenspiegel verbaute Kamera Verkehrszeichen sogar früher erkennen, nachdem an vorausfahrenden Kraftfahrzeugen vorbeigeblickt werden kann und die Optik für eine Erkennung entfernter Objekte ausgelegt ist. Möglich ist jedoch auch die Nutzung weiterer Fahrzeugsysteme, wobei beispielsweise zur Erkennung von Verkehrszeichen und/oder Geschwindigkeitsbegrenzungen speziell zur Erkennung derselben ausgebildete Fahrzeugsysteme verwendet werden können. Es sind jedoch auch Navigationssysteme bekannt, deren Kartendaten als zusätzliche Information Überholverbote und/oder Geschwindigkeitsbegrenzungen enthalten, die ausgelesen werden können. Eine durchgezogene Linie zu einer Überholspur könnte auch von einem querführenden Fahrerassistenzsystem erkannt werden. Ersichtlich bestehen eine Vielzahl von Möglichkeiten, weitere Informationen, die bei der Ermittlung der Empfehlung berücksichtigt werden können, zu erhalten.

Wie bereits erwähnt, kann als Empfehlung eine die Ausführbarkeit eines Überholvorgangs anzeigende Information ermittelt und ausgegeben werden. Dabei wird bevorzugt, wenn lediglich die Empfehlung zur Nichtausführung/Nichtausführbarkeit eines Überholvorgangs als Warnung angezeigt wird.

Zusammenfassend kann also vorgesehen sein, dass entgegenkommende wie auch vorausfahrende Verkehrsteilnehmer sowie deren Abstände und/oder Relativgeschwindigkeiten und/oder Zeitlücken ermittelt werden. Neben der Geschwindigkeit als wenigstens eines zu überholenden Fahrzeugs/der zu überholenden Fahrzeugkolonne wird auch dessen beziehungsweise deren Länge ermittelt. Dabei können auch ausreichend große Lücken zwischen einzelnen Kraftfahrzeugen in einer Kolonne erkannt und gegebenenfalls dem Fahrer im angezeigten Bild der Kamera dargestellt werden. Auf Basis der Länge des zu überholenden Fahrzeugs/der zu überholenden Kolonne, der Geschwindigkeit des vorausfahrenden Verkehrs, der maximalen erlaubten Geschwindigkeit und der gegebenen Regeln zum Überholen (Überholverbot, durchgezogene Linie) berechnet das System, selbstverständlich unter weiterer Berücksichtigung der Information über einen entgegenkommenden Verkehrsteilnehmer, ob ein Überholvorgang ausgeführt werden kann oder nicht und teilt das Ergebnis dem Fahrer mit, wobei gegebenenfalls nur bei einer Nichtausführbarkeit eine Empfehlung, nicht zu überholen, ausgegeben wird. Dabei können weitere Hinweise gegeben werden, warum das Durchführen eines Überholvorgangs nicht empfohlen wird. Diesen Betrachtungen vorgeschaltet kann dabei, wie beschrieben, noch eine Betrachtung der prädiktiven Streckendaten und eine bereits hieraus resultierende Empfehlung, nicht zu überholen, sein.

Neben dem Verfahren betrifft die vorliegende Erfindung auch ein Kraftfahrzeug, umfassend ein eine auf einen Überholvorgang bezogene Empfehlung ausgebendes Fahrerassistenzsystem mit einer diesem zugeordneten an oder in wenigstens einem Außenspiegel vorgesehenen, in Fahrtrichtung des Kraftfahrzeugs orientierten Kamera, welches zur Durchführung des erfindungsgemäßen Verfahrens ausgebildet ist. Dafür kann, insbesondere verbunden mit weiteren Fahrzeugsystemen, ein Steuergerät des Fahrerassistenzsystems verwendet werden, welches die zu betrachtenden Daten sammelt, verarbeitet und entsprechend zur Ermittlung und Ausgabe der Empfehlung auswertet. Sämtliche Ausführungen bezüglich des erfindungsgemäßen Verfahrens lassen sich analog auf das erfindungsgemäße Kraftfahrzeug übertragen, so dass auch hiermit die genannten Vorteile erreicht werden. Weitere Vorteile und Einzelheiten der vorliegenden Erfindung ergeben sich aus den im Folgenden beschriebenen Ausführungsbeispielen sowie anhand der Zeichnung. Dabei zeigen:
- Fig. 1: ein erfindungsgemäßes Kraftfahrzeug,
- Fig. 2: einen Ablaufplan des erfindungsgemäßen Verfahrens, und
- Fig. 3: eine Skizze zur Ermittlung einer Länge aus den Kamerabilddaten.

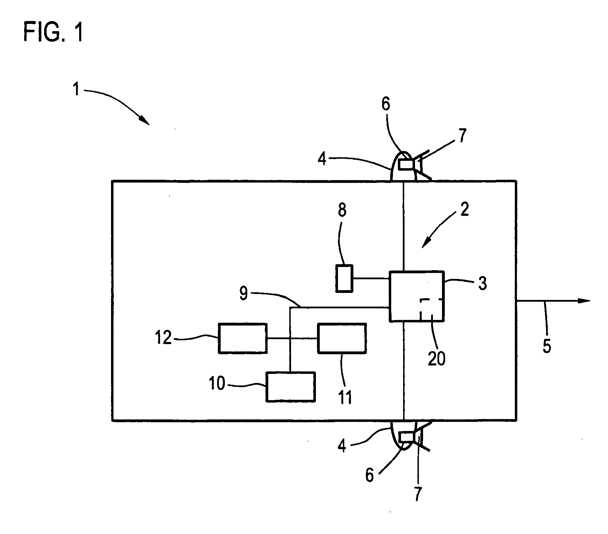

Fig. 1 zeigt eine Prinzipskizze eines erfindungsgemäßen Kraftfahrzeugs 1. Es umfasst ein eine auf einen Überholvorgang bezogene Empfehlung ausgebendes Fahrerassistenzsystem 2 mit einem Steuergerät 3. Das Steuergerät 3 verarbeitet unter anderem Daten von zwei in den Außenspiegeln 4 des Kraftfahrzeugs 1 angeordneten, in Fahrtrichtung 5 des Kraftfahrzeugs 1 orientierten Kameras 6. Die Kameras 6 sollen entgegenkommenden Verkehr sowie perspektivisch vorausfahrende Verkehrsteilnehmer aufnehmen können. Dafür weisen die Kameras 6 ein Teleobjektiv 7 auf, das den Öffnungswinkel der Kameras 6 definiert, beispielsweise bei einer VGA-Kamera auf etwa 5 - 6 Grad, da sich dann auch in größeren Entfernungen, beispielsweise von 400 oder 500 m, entgegenkommende Verkehrsteilnehmer erkennen lassen und aus den Kameradaten, letztlich also den Bildern, Verkehrsteilnehmer beschreibende Informationen gewonnen werden können.

Ist das Kraftfahrzeug 1 definitiv nur für den Rechtsverkehr vorgesehen, so kann es auch ausreichend sein, eine einzige Kamera 6 im linken Außenspiegel 4 zu verwenden, die im Folgenden auch betrachtet werden soll.

Das Steuergerät 3 kann eine Anzeigevorrichtung 8, insbesondere einen Bildschirm, ansteuern, so dass dort die aktuellen Bilder der Kamera 6 ausgegeben werden können. Ferner ist das Steuergerät 3, beispielsweise über einen CAN-Bus 9, mit weiteren Fahrzeugsystemen verbunden, wobei hier beispielhaft ein Navigationssystem 10, ein Längsführungssystem 11, beispielsweise ein ACC-System, und ein Spurhalteassistenzsystem 12 dargestellt sind. Selbstverständlich sind noch weitere, hier nicht näher dargestellte Fahrzeugsysteme verfügbar, beispielsweise solche, die dem Steuergerät 3 Daten über die Eigenbewegung des Kraftfahrzeugs 1 liefern und dergleichen.

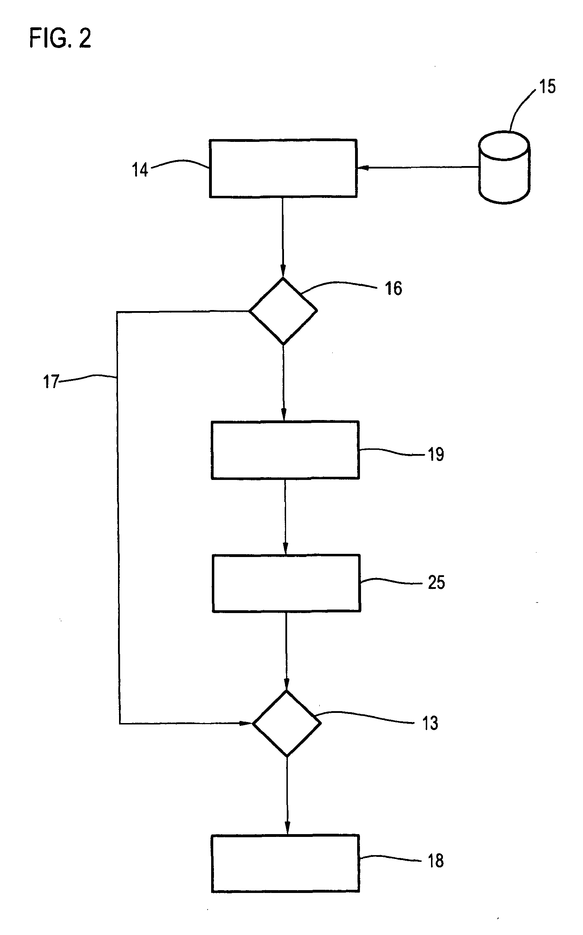

Das Fahrerassistenzsystem 2 ist nun zur Durchführung des erfindungsgemäßen Verfahrens ausgebildet, von dem ein Ausführungsbeispiel in der Fig. 2 als Ablaufsplan näher dargestellt ist. Zunächst gilt es, festzustellen, ob ein Überholvorgang möglich ist, und falls dies nicht der Fall ist, als Empfehlung eine entsprechende Warnung vor einem Überholvorgang auszugeben, die auch Hinweise auf die Ursache, also die Gründe, aus denen ein Überholvorgang nicht empfohlen wird, enthält.

In einem Schritt 14 werden nun zunächst vom Navigationssystem 10 gelieferte prädiktive Streckendaten 15 ausgewertet. Konkret wird aufgrund der prädiktiven Streckendaten überprüft, ob die Kamera 6 überhaupt entgegenkommende Verkehrsteilnehmer sehen kann oder nicht, beispielsweise, da eine nicht einsehbare Kurve folgt oder dergleichen. Zudem geben die prädiktiven Streckendaten 15 Aufschluss darüber, ob im Weiteren relevanten Straßenverlauf Kreuzungen auftreten, aus denen plötzlich andere Verkehrsteilnehmer in die Überholspur einfahren können. Konkret wird also dann in Schritt 16 verzweigt, je nach dem, ob nach den eben genannten Kriterien die Kamera 6 sinnvoll auszuwertende Daten liefern kann oder nicht. Können aufgrund einer Kreuzung oder Kurve bei einem Überholvorgang relevante Verkehrsteilnehmer nicht durch die Kamera verlässlich entdeckt werden, wird gemäß des Pfeils 17 bereits zu dem Schritt 13 gesprungen, worin nach Überprüfung des Vorliegens einer Überholabsicht in Schritt 18 als Empfehlung eine Warnung ausgegeben wird, aus den entsprechenden Gründen keinen Überholvorgang durchzuführen. Dies kann optisch, beispielsweise über die Anzeigevorrichtung 8, aber auch akustisch und/oder haptisch erfolgen. Sodann springt das Verfahren wieder zu Schritt 14 und es wird beispielsweise überprüft, ob die prädiktiven Streckendaten 15 noch immer anzeigen, dass die Kamera 6 keine sinnvoll auswertbaren Daten liefert. Es kann, was im Ablaufplan der Figur 2 aus Übersichtsgründen nicht näher dargestellt ist, ferner vorgesehen sein, dass nach Wegfall des sich aus den prädiktiven Streckendaten ergebenden Hindernisses ein entsprechender Hinweis auf diesen Wegfall an den Fahrer ausgegeben wird.

Zeigen die prädiktiven Streckendaten 15 in Schritt 16 jedoch an, dass sinnvolle Kameradaten gewonnen werden können, so werden diese in einem Schritt 19 ausgewertet, um verschiedene Informationen aus den Daten der Kamera zu gewinnen. Insbesondere können eine Vielzahl der benötigten Informationen ausschließlich aus den Kameradaten gewonnen werden.

Um diese Auswertung der Daten der Kamera 6 vornehmen zu können, kann das Steuergerät 3 beispielsweise eine Bildverarbeitungseinheit 20 enthalten. Dort sind unter anderem auch die Daten über die Optik der Kamera 6 abgelegt, aus denen den Bildpunkten (Pixel) zugeordnete Abstände folgen, die für die folgenden Berechnungen notwendig sind.

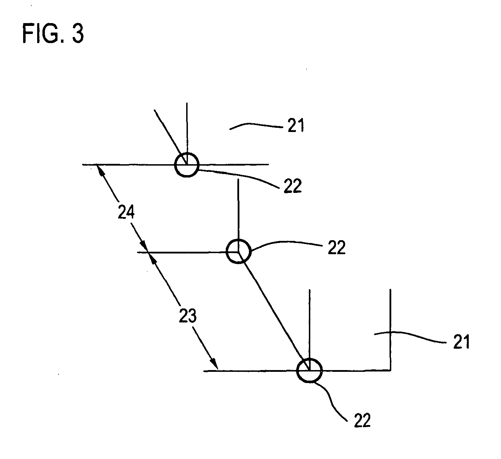

Zunächst werden dem Kraftfahrzeug 1 vorausfahrende Verkehrsteilnehmer betrachtet. Dabei ist es das hauptsächliche Ziel, die Länge eines zu überholenden Kraftfahrzeugs und/oder einer zu überholenden Kraftfahrzeugkolonne zu ermitteln. Dies sei mit Hilfe der Fig. 3 näher erläutert. Dort sind lediglich schematisch die Kanten zweier vorausfahrender Verkehrsteilnehmer 21 gezeigt. Über einen geeigneten Algorithmus werden vordere und hintere Eckpunkte 22 bestimmt. Da die Optik der Kamera bekannt ist, ist auch der Abstand zwischen diesen Punkten bekannt, so dass sowohl die Länge 23 eines vorausfahrenden Kraftfahrzeugs 21 als auch die Länge der Lücke 24 zwischen vorausfahrenden Verkehrsteilnehmern 21 ermittelt werden kann.

Indem mehrere aufeinanderfolgende Bilder betrachtet werden, ist es zudem möglich, die relative Geschwindigkeit vorausfahrender Verkehrsteilnehmer 21 zu dem Kraftfahrzeug 1 sowie deren Abstand und die Zeitlücke zu ermitteln. Es sei jedoch angemerkt, dass es selbstverständlich auch möglich ist, diese Informationen aus anderen Fahrzeugsystemen zu ermitteln, beispielsweise dem Längsführungssystem 11.

Besonders betrachtet werden die Daten über die Lücken zwischen den vorausfahrenden Kraftfahrzeugen. Überschreitet deren Länge einen vorbestimmten Schwellwert, so wird erkannt, dass eine zum Einscheren geeignete Lücke gegeben ist, so dass weiter vorausfahrende Verkehrsteilnehmer 21 nicht mehr weiter betrachtet werden müssen. Die erste auftretende, zum Einscheren geeignete Lücke definiert mithin das zu überholende Kraftfahrzeug beziehungsweise die zu überholende Kraftfahrzeugkolonne. Zum Einscheren geeignete Lücken werden in diesem Ausführungsbeispiel ferner in den auf der Anzeigevorrichtung 8 dargestellten Kamerabildern markiert und hervorgehoben.

Ferner werden aus den Kameradaten in Schritt 19 auch Informationen über das Vorhandensein und bei Vorhandensein die Dynamik eines entgegenkommenden Verkehrsteilnehmers gewonnen. Auch dort - auf der während des Überholvorgangs zu nutzenden Spur - ist es aufgrund der bekannten Optik der Kamera 6 möglich, den Abstand zu den entgegenkommenden Verkehrsteilnehmer zu ermitteln und bei Betrachtung zeitlich aufeinanderfolgende Bilder der Kamera 6 eine Information über die Geschwindigkeit und/oder die Zeitlücke zu gewinnen. Dies ist allein aus den Daten der Kamera 6 möglich. Es ist also kein weiterer, ebenso in einem Außenspiegel 4 anzuordnender Radarsensor erforderlich.

In Schritt 19 wird ferner ermittelt, ob in den Daten der Kamera 6 oder einer anderen Kamera Verkehrszeichen zu erkennen sind, und wenn ja, ob diese ein Überholverbot und/oder eine Geschwindigkeitsbegrenzung anzeigen. Ferner wird überprüft, ob die Überholspur von der aktuellen Fahrspur durch eine durchgezogene Linie, die ebenfalls ein Überholverbot anzeigt, getrennt ist.

Es sei an dieser Stelle angemerkt, dass Daten bezüglich eines Überholverbots und/oder einer Geschwindigkeitsbegrenzung auch aus anderen Fahrzeugsystemen gewonnen werden können, beispielsweise aus in den Kartendaten des Navigationssystems 10 enthaltenen Informationen und/oder aus einem speziell auf die Erkennung von Verkehrszeichen ausgelegtem Fahrzeugsystem. Denkbar ist es ferner, dass die Information über eine durchgezogene Fahrbahnmarkierung von dem Spurhalteassistenzsystem 12 geliefert wird. Ersichtlich können auch Daten von anderen Fahrzeugsystemen gesammelt und genutzt werden.

Diese gesamten gesammelten Daten werden nun in einem Schritt 25 zur Ermittlung der Empfehlung ausgewertet. Liegt beispielsweise ein Überholverbot vor, so wird eine Empfehlung ausgesprochen, nicht zu überholen. Dies gilt analog dann, wenn bei einem Überholvorgang die zulässige Höchstgeschwindigkeit überschritten werden würde. In beiden Fällen wird zusätzlich zu der Empfehlung, keinen Überholvorgang durchzuführen, ein entsprechender Hinweis auf diese Sachverhalte ausgegeben. Letztlich werden also Informationen über das eigene Kraftfahrzeug kombiniert mit Informationen über vorausfahrende Kraftfahrzeuge, insbesondere deren Länge beziehungsweise die Länge der Kolonne, und Informationen über entgegenkommenden Verkehr, insbesondere den Abstand und die Geschwindigkeit, verwendet, um zu ermitteln, ob ein sicherer Überholvorgang unter Einhaltung der Geschwindigkeitsbegrenzung möglich ist. Allein ein Überholverbot stellt ein allgemeines Ausschlusskriterium dar.

Schließlich wird auch nach Beendigung des Schrittes 25, falls von einem Überholvorgang abgeraten werden soll, in einem Schritt 13 überprüft, ob eine mögliche Überholabsicht des Fahrers des Kraftfahrzeugs 1 erkannt werden kann. Dabei können beispielsweise Daten der Fahrerassistenzsysteme 11 und 12 und/oder Daten zur Betätigung eines Fahrtrichtungsanzeigers berücksichtigt werden, die ihre Daten dem Steuergerät 3 zur Verfügung stellen. Anhand verschiedener Kriterien kann überprüft werden, ob eine Überholabsicht des Fahrers erkannt werden kann. Beispielsweise kann eine Überholabsicht unter verschiedenen Kriterien als erkannt angesehen werden, beispielsweise, dass eine schnelle Annäherung an ein vorausfahrendes Kraftfahrzeug erfolgt und/oder der Fahrer das Kraftfahrzeug 1 am linken Fahrspurrand bewegt. Sobald in jedem Fall eine Überholabsicht erkannt wird, werden die Daten der linken Kamera 6, also ihre Bilder, auf der Anzeigevorrichtung 8 dargestellt. Die Überholabsicht wird also am Ende als eine Art "Filter" ermittelt, wobei nur bei einer erkannten Überholansicht in Schritt 18 die entsprechende Empfehlung schließlich an den Fahrer ausgegeben wird. Ansonsten wird direkt bei Schritt 14 wieder begonnen.

Es sei an dieser Stelle noch angemerkt, dass auch Ausgestaltungen denkbar sind, in denen die Überprüfung einer Überholabsicht auch bereits vor der Ermittlung der Empfehlung stattfindet, so dass letztere ggf. weggelassen werden kann, wenn keine Überholabsicht vorliegt.

So kann durch eine maximale Ausnutzung der Kameradaten und deren zielgerichtete Auswertung eine verlässliche Warnung vor gefährlichen beziehungsweise verbotenen Überholvorgängen erzeugt und ausgegeben werden, wobei zusätzlich Informationen weiterer Fahrzeugsysteme genutzt werden können.

## Patentansprüche

1. Verfahren zum Betrieb eines eine auf einen Überholvorgang bezogene Empfehlung, insbesondere gegen einen Überholvorgang sprechende Empfehlung, ausgebenden Fahrerassistenzsystems eines Kraftfahrzeugs mit einer an oder in wenigstens einem Außenspiegel vorgesehenen, in Fahrtrichtung des Kraftfahrzeugs orientierten Kamera, deren Daten durch das Fahrerassistenzsystem ausgewertet werden,
**dadurch gekennzeichnet,**
**dass** aus den Daten der Kamera eine Länge eines vorausfahrenden Kraftfahrzeugs und/oder einer vorausfahrenden Kraftfahrzeugkolonne ermittelt und bei der Ermittlung der Empfehlung berücksichtigt wird.

2. Verfahren nach Anspruch 1,
**dadurch gekennzeichnet,**
**dass** bei einer vorausfahrenden, zu überholenden Kolonne die Länge wenigstens einer Lücke in der Kolonne ermittelt wird und bei einer zum Einscheren ausreichenden Lücke nur die bis zu der Lücke zu überholenden Kraftfahrzeuge bei der Ermittlung der Empfehlung berücksichtigt wird.

3. Verfahren nach Anspruch 1 oder 2,
**dadurch gekennzeichnet,**
**dass** durch Auswertung allein der Daten der Kamera wenigstens eine für einen Überholvorgang relevante Information bezüglich eines entgegenkommenden und/oder wenigstens eines vorausfahrenden Verkehrsteilnehmers, insbesondere ein Abstand zu diesem Verkehrsteilnehmer und/oder eine Geschwindigkeit des Verkehrsteilnehmers und/oder eine Zeitlücke zu dem Verkehrsteilnehmer, ermittelt und bei der Erstellung der an den Fahrer auszugebenden Empfehlung berücksichtigt wird.

4. Verfahren nach einem der vorangehenden Ansprüche,
**dadurch gekennzeichnet,**
**dass** eine ein Teleobjektiv umfassende Kamera verwendet wird.

5. Verfahren nach einem der vorangehenden Ansprüche,
**dadurch gekennzeichnet,**
**dass** bei der Erstellung der Empfehlung einen zukünftigen Straßenverlauf vor dem Kraftfahrzeug beschreibende prädiktive Streckendaten eines Navigationssystems berücksichtigt werden.

6. Verfahren nach Anspruch 5,
**dadurch gekennzeichnet,**
**dass** bei aufgrund eines kurvigen Straßenverlaufes nicht von der Kamera erfassbaren entgegenkommenden Verkehrsteilnehmern und/oder einer in einem vorbestimmten, gegebenenfalls von der aktuellen Geschwindigkeit des Kraftfahrzeugs abhängigen Entfernungsbereich auftretenden Kreuzung, insbesondere ohne eine Auswertung von Kameradaten, als Empfehlung eine Warnung an den Fahrer ausgegeben wird.

7. Verfahren nach Anspruch 6,
**dadurch gekennzeichnet,**
**dass** nach einer ausgegebenen Warnung bei einem für einen Überholvorgang in Frage kommenden zukünftigen Straßenverlauf ein entsprechender Hinweis an den Fahrer ausgegeben wird.

8. Verfahren nach einem der vorangehenden Ansprüche,
**dadurch gekennzeichnet,**
**dass** als Empfehlung eine die Ausführbarkeit eines Überholvorgangs anzeigende Information ermittelt und ausgegeben wird.

9. Verfahren nach einem der vorangehenden Ansprüche,
**dadurch gekennzeichnet,**
**dass** eine eine mögliche Überholabsicht beschreibende Größe ermittelt wird, wobei nur bei einer eine mögliche Überholabsicht anzeigenden Größe eine Empfehlung ausgegeben wird.

10. Verfahren nach Anspruch 9,
**dadurch gekennzeichnet,**
**dass** zur Ermittlung der Größe Daten der Kamera und/oder Daten eines querführenden Fahrerassistenzsystems und/oder Daten eines längsführenden Fahrerassistenzsystems und/oder Daten zur Betätigung eines Fahrtrichtungsanzeigers berücksichtigt werden.

11. Verfahren nach Anspruch 9 oder 10,
**dadurch gekennzeichnet,**
**dass** als Kriterium für eine mögliche Überholabsicht ein schnelles Auffahren auf ein voranfahrendes Kraftfahrzeug und/oder ein Fahren am linken Fahrbahnrand bei der Ermittlung der Größe und/oder eine Betätigung des Fahrtrichtungsanzeigers berücksichtigt werden.

12. Verfahren nach einem der vorangehenden Ansprüche,
**dadurch gekennzeichnet,**
**dass** bei einem aus Daten der Kamera und/oder Daten eines anderen Fahrzeugsystems erkannten Überholverbotverkehrszeichen und/oder einer aus Daten der Kamera und/oder Daten eines anderen Fahrzeugsystems erkannten durchgezogenen Linie zur Überholspur und/oder einer aus Daten der Kamera und/oder Daten eines anderen Fahrzeugsystems erkannten Geschwindigkeitsbegrenzung, die bei der Durchführung eines Überholvorgangs überschritten werden müsste, eine einen entsprechenden Hinweis enthaltende Warnung als Empfehlung an den Fahrer ausgegeben wird.

13. Kraftfahrzeug (1), umfassend ein eine auf einen Überholvorgang bezogene Empfehlung ausgebendes Fahrerassistenzsystem (2) mit einer diesem zugeordneten an oder in wenigstens einem Außenspiegel (4) vorgesehenen, in Fahrtrichtung (5) des Kraftfahrzeugs (1) orientierten Kamera (6), ausgebildet zur Durchführung eines Verfahrens nach einem der vorangehenden Ansprüche.

## Claims

1. Method for operating a driver assistance system of a motor vehicle outputting a recommendation related to an overtaking manoeuvre, in particular a recommendation advising against an overtaking manoeuvre, comprising a camera arranged on or in at least one wing mirror and oriented in the driving direction, the data of which camera are evaluated by the driver assistance system, **characterised in that** a length of a motor vehicle driving ahead and/or a length of a queue of motor vehicles driving ahead is determined and taken into consideration when determining the recommendation.

2. Method according to claim 1, **characterised in that**, in the case of a queue to be overtaken which is driving ahead, the length of at least one gap in the queue is determined, and in the case of a gap which is sufficient for cutting in, only the motor vehicles to be overtaken up to the gap are taken into consideration when determining the recommendation.

3. Method according to either claim 1 or claim 2, **characterised in that**, by evaluating only the data from the camera, at least one item of information relevant for an overtaking manoeuvre and relating to an on coming road user and/or at least one road user driving ahead, in particular a distance to said road user and/or a speed of the road user and/or a time gap to the road user is determined and taken into consideration when determining the recommendation to be output to the driver.

4. Method according to any of the preceding claims, **characterised in that** a camera comprising a telephoto lens is used.

5. Method according to any of the preceding claims, **characterised in that** predictive route data from a navigation system which describe a future course of the road in front of the motor vehicle are taken into consideration when determining the recommendation.

6. Method according to claim 5, **characterised in that** a warning is output to the driver as a recommendation, in particular without evaluating camera data, when the camera is unable to detect oncoming road users due to a winding course of the road and/or when an intersection is located in a predetermined distance range which is optionally dependent on the actual speed of the motor vehicle.

7. Method according to claim 6, **characterised in that**, after a warning has been output, an appropriate suggestion is output to the driver in the case of a future course of the road which is viable for an overtaking manoeuvre.

8. Method according to any of the preceding claims, **characterised in that** information indicating the viability of an overtaking manoeuvre is determined and output as a recommendation.

9. Method according to any of the preceding claims, **characterised in that** a parameter indicating a possible intention to overtake is determined, a recommendation only being output when the parameter indicates a possible intention to overtake.

10. Method according to claim 9, **characterised in that** data from the camera, and/or data from a transverse guidance driver assistance system, and/or data from a longitudinal guidance driver assistance system, and/or data for actuating a direction indicator, are taken into consideration for determining the parameter.

11. Method according to either claim 9 or claim 10, **characterised in that** rapidly closing in on a motor vehicle driving ahead and/or driving at the edge of the road when determining the parameter and/or actuating a direction indicator are taken into consideration as criteria for a potential intention to overtake.

12. Method according to any of the preceding claims, **characterised in that** a warning containing an appropriate suggestion is output as a recommendation to the driver in the case of a no-overtaking road sign being recognised from data from the camera and/or data from another motor vehicle system, and/or a solid line to the fast lane being recognised from data from the camera and/or data from another motor vehicle system, and/or a speed limit being recognised from data from the camera and/or data from another motor vehicle system, which speed limit would have to be exceeded when carrying out an overtaking manoeuvre .

13. Motor vehicle (1), comprising a driver assistance system (2) outputting a recommendation related to an overtaking manoeuvre, said system comprising a camera (6) associated therewith, arranged on or in at least one wing mirror (4) and oriented in the driving direction (5) of the motor vehicle (1), configured to carry out a method according to any of the preceding claims.

## Revendications

1. Procédé de fonctionnement d'un système d'assistance au conducteur d'un véhicule automobile, fournissant une recommandation relative à un processus de dépassement, en particulier s'opposant à un processus de dépassement, avec une caméra orientée dans le sens de roulement du véhicule automobile et prévue sur ou dans au moins un rétroviseur extérieur, dont les données sont analysées par le système d'assistance au conducteur,
**caractérisé en ce**
**qu'**une longueur d'un véhicule automobile qui précède et/ou d'une colonne de véhicules automobiles qui précède est déterminée à partir des données de la caméra et est prise en considération lors de la détermination de la recommandation.

2. Procédé selon la revendication 1,
**caractérisé en ce**
**que**, pour une colonne à doubler qui précède, la longueur d'au moins un intervalle dans la colonne est déterminée et, en cas d'intervalle suffisant pour se rabattre, seuls les véhicules automobiles à doubler jusqu'à l'intervalle sont pris en considération lors de la détermination de la recommandation.

3. Procédé selon la revendication 1 ou 2,
**caractérisé en ce**
**qu'**en analysant uniquement les données de la caméra, au moins une information importante pour un processus de dépassement relative à un usager de la route venant en sens inverse et/ou au moins un usager de la route qui précède, en particulier une distance par rapport à cet usager de la route et/ou une vitesse de l'usager de la route et/ou un intervalle de temps par rapport à l'usager de la route, est déterminée et est prise en considération lors de l'établissement de la recommandation à fournir au conducteur.

4. Procédé selon l'une quelconque des revendications précédentes,
**caractérisé en ce**
**qu'**une caméra comprenant un téléobjectif est utilisée.

5. Procédé selon l'une quelconque des revendications précédentes,
**caractérisé en ce**
**que** des données d'itinéraire prédictives d'un système de navigation décrivant un futur tracé de la route devant le véhicule automobile sont prises en considération lors de l'établissement de la recommandation.

6. Procédé selon la revendication 5,
**caractérisé en ce**
**que**, dans le cas d'usagers de la route venant en sens inverse non détectables par la caméra en raison d'un tracé de la route en courbe et/ou en cas de croisement survenant dans une zone d'éloignement prédéterminée qui dépend éventuellement de la vitesse actuelle du véhicule automobile, un avertissement est fourni au conducteur sous forme de recommandation, en particulier sans analyser des données de la caméra.

7. Procédé selon la revendication 6,
**caractérisé en ce que**,
à la suite de la fourniture d'un avertissement dans le cas d'un futur tracé de la route entrant en ligne de compte pour un processus de dépassement, une indication correspondante est fournie au conducteur.

8. Procédé selon l'une quelconque des revendications précédentes,
**caractérisé en ce**
**qu'**une information indiquant la faisabilité d'un processus de dépassement est déterminée et fournie sous forme de recommandation.

9. Procédé selon l'une quelconque des revendications précédentes,
**caractérisé en ce**
**qu'**une grandeur décrivant une possible intention de dépassement est déterminée, une recommandation étant fournie seulement en cas de grandeur indiquant une possible intention de dépassement.

10. Procédé selon la revendication 9,
**caractérisé en ce**
**que** des données de la caméra et/ou des données d'un système d'assistance au conducteur transversal et/ou des données d'un système d'assistance au conducteur longitudinal et/ou des données pour l'actionnement d'un indicateur de changement de direction sont prises en considération pour la détermination de la grandeur.

11. Procédé selon la revendication 9 ou 10,
**caractérisé en ce**
**que**, comme critère d'une possible intention de dépassement, une approche rapide vers un véhicule automobile qui précède et/ou un roulement sur le bord gauche de la chaussée sont pris en considération lors de la détermination de la grandeur, et/ou un actionnement de l'indicateur de changement de direction.

12. Procédé selon l'une quelconque des revendications précédentes,
**caractérisé en ce**
**qu'**en cas de panneau d'interdiction de dépassement reconnu à partir de données de la caméra et/ou de données d'un autre système du véhicule et/ou en cas de ligne continue de séparation avec la voie de dépassement reconnue à partir de données de la caméra et/ou de données d'un autre système du véhicule et/ou en cas de limitation de vitesse qui est reconnue à partir de données de la caméra et/ou de données d'un autre système de véhicule et qui devrait être dépassée lors de la réalisation d'un processus de dépassement, un avertissement contenant une indication correspondante est fourni au conducteur sous forme de recommandation.

13. Véhicule automobile (1) comprenant un système d'assistance au conducteur (2) fournissant une recommandation relative à un processus de dépassement, avec une caméra (6) orientée dans le sens de roulement (5) du véhicule automobile (1), prévue sur ou dans au moins un rétroviseur extérieur (4), affectée à ce système, constitué pour la réalisation d'un procédé selon l'une quelconque des revendications précédentes.
